# EUROPEAN PATENT SPECIFICATION

(11) **EP 1 174 624 B1**
(45) Date of publication and mention of the grant of the patent: **26.10.2005**
(21) Application number: 01117059.4
(22) Date of filing: 13.07.2001
(51) Int. Cl.: F15B 7/08, F16D 25/12

(54) **Hydraulic master cylinder with integral switch structure**
Hydraulischer Geberzylinder mit eingebautem Schalter
Cylindre hydraulique émetteur avec interrupteur intégré

(30) Priority: 20.07.2000 US 619837
(43) Date of publication of application: 23.01.2002
(73) Proprietor: FTE automotive GmbH, 96106 Ebern (DE)
(72) Inventor: Stevens, Bryan M., Clinton Township, Michigan 48038 (US)
(74) Representative: Oppermann, Mark

(56) References cited:
- DE-A- 19 824 940
- US-A- 4 383 153
- US-A- 4 649 238
- US-A- 4 719 444
- US-A- 4 742 193
- US-A- 4 878 041
- US-A- 5 343 005
- US-A- 6 000 516

## Description

### BACKGROUND OF THE INVENTION

This invention relates to pressure cylinder apparatus according to the preamble portion of claim 1, and more particularly to a hydraulic master cylinder assembly incorporating switching functions.

It has become general practice in the automobile industry to interlock the operation of the engine starter motor with other controls of the motor vehicle such that the starter motor is rendered inoperative unless the transmission is in the neutral or park position in motor vehicles provided with an automatic transmission or, in motor vehicles provided with a foot operated clutch and a manually operated gear shift transmission, unless the transmission is in the neutral position and/or the clutch pedal is fully depressed to fully release the clutch. In addition, it is convenient in a motor vehicle provided with a cruise control and a mechanical clutch to shut off the operation of the cruise control upon, for example, downshifting which in turn requires release of the clutch. Specifically, it is necessary that the cruise control be disconnected even before the clutch is fully released to enable the driver to cut out the cruise control by a slight foot tap on the clutch pedal. It is also desirable, upon clutch disengagement, to generate a signal for transmission to the engine computer indicating that the torque path is going to be disengaged so that the computer may take appropriate action such as shutting down the fuel injection or reducing the fuel injection.

Many arrangements have been provided for providing switching functions in association with the master cylinder assembly to accomplish the various desired switching operations as the clutch pedal is depressed. Examples of such switches are shown for example in U.S. Patent Nos. 4,878,041; 4,719,444; 4,742,193; 4,649,238; and 5,343,005. The switch devices shown in these prior art patents are all of the type in which the switch mounts on the push rod of the master cylinder assembly and in which the switch includes a plurality of axially spaced switches which can be sequentially actuated in response to depression of the clutch to generate a sequential series of control signals with respect to cruise control, starter interlock, fuel injection control, etc. Whereas these prior art switches have proven to be generally satisfactory, generating the required control signals in response to depression of the clutch, the use of a separate switch module on the push rod of the master cylinder adds significantly to the overall cost and complexity of the master cylinder assembly and the sequential arrangement of the various switches along the length of the switch module results in a relatively long switch assembly which is incapatible with the relatively short push rods that are found in many present day motor vehicles.

A pressure cylinder apparatus as described in the preamble portion of claim 1 is known from document DE-A-198 24 940.

### SUMMARY OF THE INVENTION

This invention is directed to the provision of an improved switching arrangement for a master cylinder assembly.

More specifically, this invention is directed to the provision of a master cylinder assembly in which the switching functions are provided integral with the master cylinder assembly.

This object is solved by the features of claim 1. Advantageously developed embodiments of the invention are subject-matter of claims 2 to 13.

According to the invention, in a pressure cylinder apparatus comprising a hydraulic cylinder structure having a cylindrical wall defining a generally closed left end and a generally open right end, a piston moveable axially within the hollow of the cylinder structure, a seal structure between the piston and the cylinder structure defining a fluid pressure chamber within the cylinder structure on the left side of the piston and an unpressurized chamber on the right side of the piston, a fluid pressure fitting communicating with the pressure chamber for connection to a fluid pressure conduit communicating with a coacting fluid pressure device, a piston rod extending through the open end of the cylinder structure and into the unpressurized chamber for connection to the right side of the piston, a piston contact means which is carried by the piston at a location on the piston to the right of the seal structure and within the unpressurized chamber, a cylinder contact means which is disposed at an interior surface of the cylinder structure within the unpressurized chamber for coaction with the piston contact means in response to axial movement of the piston in the hollow of the cylinder structure, and an electrical lead means which is connected to one of the contact means and extends to a location external to the pressure cylinder apparatus for providing an electrical control signal generated in response to engagement of the cylinder contact means with the piston contact means; the cylinder structure includes a slot in which a cartridge is fitted, wherein the cylinder contact means are provided on the inner surface of the cartridge.

The cylinder contact means may comprise a plurality of axially spaced pairs of cylinder contacts disposed at an interior surface of the cylinder structure within the unpressurized chamber for selective coaction with the piston contact means in I response to axial movement of the piston in the hollow of the cylinder structure, and the electrical lead means may comprise a plurality of pairs of electrical leads connected to the respective pairs of cylinder contacts and extending to locations external to the cylinder structure for providing respective electrical control signals generated in response to selective bridging of the pairs of cylinder contacts by the piston contact means.

The seal structure is preferably carried by the cylinder structure. The seal structure may comprise an annular elastomeric seal positioned in an annular groove provided in the interior surface of the cylinder structure and arranged for wiping engagement with an exterior surface of the piston as the piston moves axially in the cylinder structure.

The annular groove for receiving the seal structure may be formed between coacting portions of a left cylinder structure and a right cylinder structure.

The seal structure may comprise two axially spaced seals which contact the piston and a spacer sandwiched between the seals.

The piston may be formed from an inner plastics portion and an outer metal portion.

The inner plastics portion of the piston may comprise cooperating portions which define a part-spherical socket which receives a ball end portion on the piston rod to allow articulation of the piston rod relative to the piston.

The cooperating inner portions of the piston may be held together by a metal collar which acts as the piston contact means.

The separate cartridge provided with the cylinder contact means allows the switching functions of the apparatus to be totally isolated from the remainder of the apparatus for inventory and quality control purposes.

### BRIEF DESCRIPTION OF THE DRAWINGS

The description herein makes reference to the accompanying drawings wherein like reference numerals refer to like parts throughout the several views, and wherein:
Figure 1 is a partial schematic view of a motor vehicle incorporating a master cylinder apparatus according to the invention;
Figure 2 is a cross-sectional view of the master cylinder apparatus;
Figure 3 is a cross-sectional view taken on line 3-3 of Figure 2;
Figure 4 is a perspective exploded view of the master cylinder apparatus; and

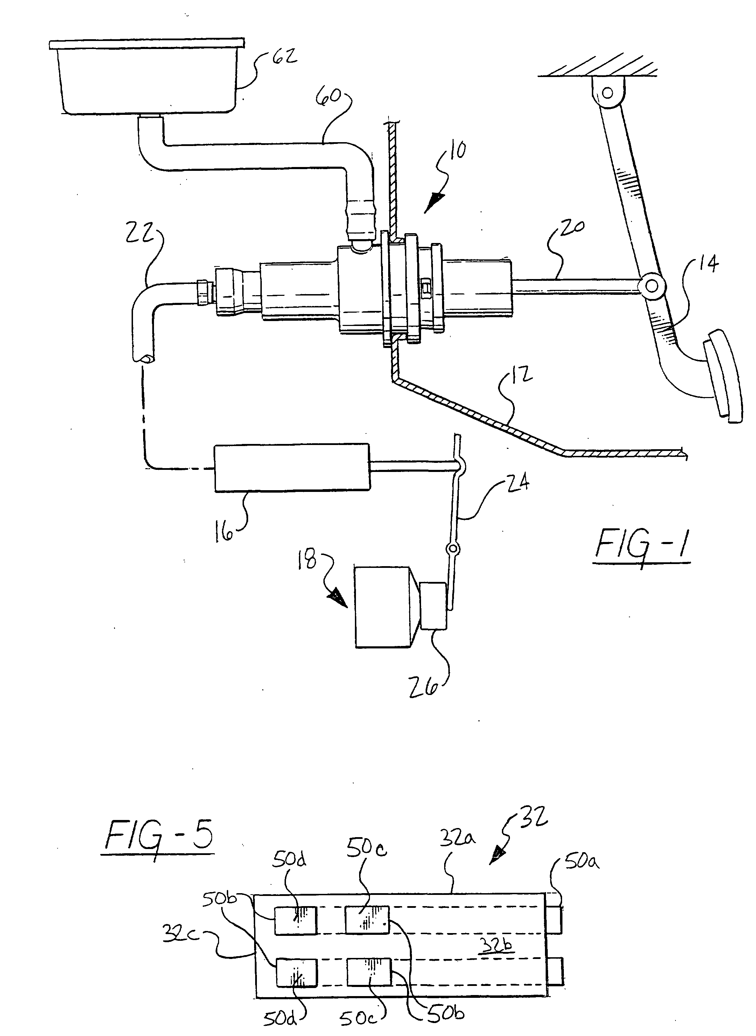

Figure 5 is a bottom detail view of a switch cartridge embodied in the master cylinder apparatus.

### DESCRIPTION OF THE PREFERRED EMBODIMENT

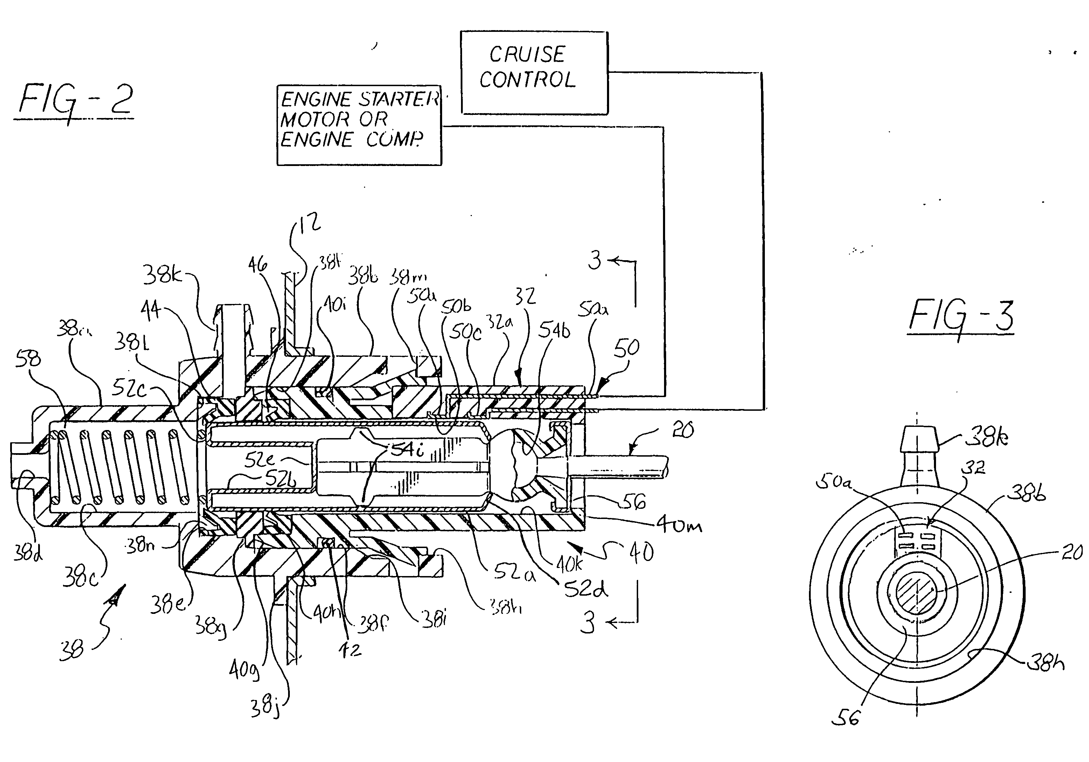

The invention master cylinder apparatus 10 is seen in Figure 1 in association with a motor vehicle of the type including a firewall 12, a clutch pedal 14, a slave cylinder 16, and a clutch 18. The master cylinder 10 is fixedly secured to firewall 12 in known manner and clutch pedal 14 is pivotally secured to the free end of the push rod 20 of the master cylinder so that depression of the clutch pedal 14 by a vehicle operator transmits pressurized hydraulic fluid through a conduit 22 to slave cylinder 16 which operates a release lever 24 which acts upon a clutch release bearing 26 to disengage the clutch 18 in known manner.

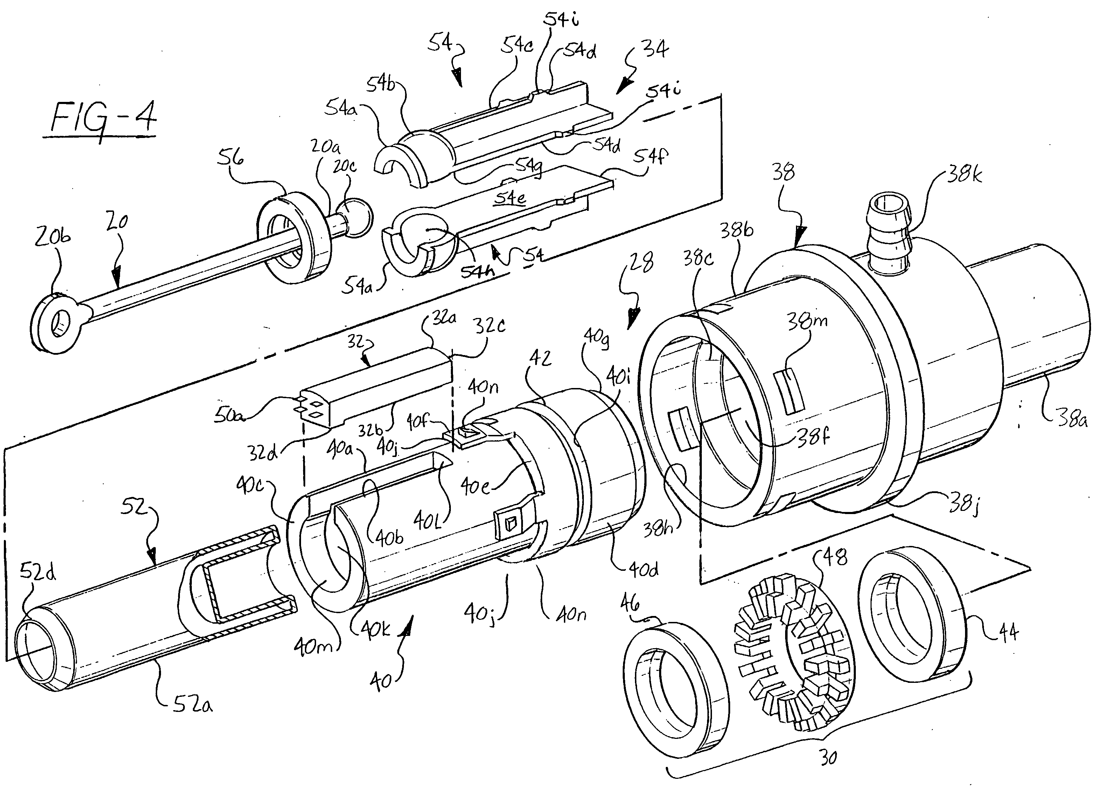

Master cylinder 10 (Figures 2 and 3) includes a cylinder structure 28, a seal assembly 30, a cartridge 32, push rod 20, a piston assembly 34, and a reservoir 62.

The designations left and right as hereinafter employed are with respect to Figure 2 and the designations forwardly and rearwardly as hereinafter employed designate leftward and rightward movement, respectively, as viewed in Figure 2.

Cylinder structure 28 includes a left cylinder structure 38 and a right cylinder structure 40. The cylinder structures are shown in their coupled relationship in Figure 2 and in an exploded relationship in Figure 3.

Left cylinder structure 38 includes a left relatively small diameter portion 38a and a right relatively large diameter portion 38b. Left portion 38a defines a bore 38c and a fluid pressure outlet 38d. Right portion 38b defines a bore 38e, a counter bore 38f, a conical bore 38g interconnecting bores 38e and 38f, a further counter bore 38h, a conical bore 38i interconnecting bores 38f and 38h, an external mounting flange 38j, a reservoir fitting 38k, and an annular shoulder 381 interconnecting bores 38c and 38e.

Right cylinder member 40 includes a main body tubular portion 40a including an axially extending slot 40b opening at the right face 40c of the main body tubular portion, an enlarged diameter flange portion 40d joined to main body portion 40a by an annular shoulder 40e, and circumferentially spaced finger portions 40f extending rearwardly from flange portion 40e in radially spaced relation to main body portion 40a. The left portion of flange portion 40d has an angled exterior surface 40g defining an annular interior groove 40h. Flange portion 40d further defines an annular external groove 40i for receipt of an elastomeric O-ring 42. Right cylinder member 40 is fitted telescopically into left cylinder member 38 with flange portion 40d slidably received in bore 38f, O-ring 42 sealingly engaging bore 38f, and nubs 40n carried by the free ends 40j of fingers 40f snappingly received in respective arcuate slots 38m in portion 38b to preclude inadvertent withdrawal of part 40 from part 38.

Seal assembly 30 includes a primary annular elastomeric seal 44, a secondary annular elastomeric seal 46, and an annular spacer 48. Primary seal 44 is received in an annular groove 38n defined between shoulder 381 and bore 38e, secondary seal 46 is received in annular groove 40h, and annular spacer 48 is positioned between the primary and secondary seals proximate conical bore 38g.

Cartridge 32 (see also Figure 4) includes a main body portion 32a formed of a suitable insulative material and a plurality of conductors or leads 50 embedded in main body portion 32a and formed of a suitable conductive material. Main body portion 32a is sized to fit in slot 40b and has an arcuate cross-sectional configuration conforming to the radius of cylinder main body portion 40a so as to, when fitted into slot 40b, form a continuation of the arcuate circumferential curve of main body portion 40a. When fitted into slot 40b the inner arcuate surface 32b of the main body portion is flush with bore 40k of cylinder main body portion 40a, the left end 32c of the main body portion is seated against the end 401 of slot 40b and telescopically positioned in cylinder bore 38h, and the main body portion is positioned circumferentially between circumferentially spaced finger portions 40f. Leads 50 extend axially through main body portion 32a and define terminal ends 50a for connection to external leads and contacts 50b positioned in exposed relation flush with the inner surface 32b of the main body portion.

A plurality of pairs of leads are provided. For example, and as shown, two pairs of leads are provided with the first pair of leads terminating in a pair of circumferentially spaced contacts 50c and the second pair of leads terminating in a pair of circumferentially spaced contacts 50d spaced axially from contacts 50c.

Push rod 20 includes a main body shaft portion 20a, a swivel portion 20b for pivotal connection to clutch pedal 14, and a spherical ball end portion 20c.

Piston assembly 34 includes a piston member 52, a pair of insert halves 54, and a piston contact 56.

Piston member 52 is formed of a suitable sheet metal material and includes a main body outer shell portion 52a, an inner tubular portion 52b positioned concentrically within the left end of outer shell portion 52a and joined to the left end of shell portion 52a by annular shoulder 52c, and an inwardly directed flange portion 52d at the right end of outer shell portion 52a. Piston 52 is sized to fit slidably within bore 40k and to sealingly engage at its left end with the inner lip seal portions of primary seal 44 and secondary seal 46.

Each insert half 54 is formed of a suitable plastic material in a suitable molding operation and includes a right end flange portion 54a, a hemispherical portion 54b adjoining flange portion 54a, and a main body portion 54c extending rearwardly from hemispherical portion 54b and defined by a plurality of circumferentially spaced ribs 54d and a flat inner face 54e.

In the assembled relation of the piston assembly, insert halves 54 are received within piston member 52 with nubs 54i on the ribs 54d engaging the inner piston member walls, the left end 54f of the insert halves bearing against the blind end 52e of the inner tubular portion 52b of the piston member, and the flange 52d of the piston member crimped over the ends 54g of the ribs 54d to firmly lock the piston member over the main body portions of the insert halves. The spherical portions 54b and the flange portions 54a of the insert halves project rearwardly out of the piston member to define a spherical cavity 54h and an annular flange constituted by the fitted together flange halves 54a of the upper and lower insert halves.

Contact 56 has an annular configuration, is formed of a suitable conductive material, and is fitted over flanges 54a in crimping fashion so as to be fixedly mounted on flanges 54a.

In the assembled relation of the piston assembly and the push rod, the ball end 20c of the push rod is received in spherical cavity 54h and the main body 20a of the push rod extends through the open right-hand end of right cylinder member 40.

In the assembled relation of the master cylinder, it will be seen that the piston assembly and the seals coact to define a hydraulic fluid pressure chamber within the bore 38c on the left side of the piston and a dry unpressurized atmospheric chamber within the bore 40k on the right side of the piston, and it will further be seen that the contact pairs 50c/50d as well as the annular contact 56 are positioned in the dry, unpressurized chamber defined within the bore 40k. It further will be understood that fitting 38k is connected by a conduit, such as conduit 60 seen in Figure 1, to an external hydraulic fluid reservoir 62 whereby to deliver hydraulic fluid to the cylinder apparatus and it will be further understood that seal assembly 30 acts in known manner to allow the delivery of hydraulic fluid to the pressure chamber within the bore 38c on the left side of the piston assembly while precluding delivery of hydraulic fluid to the unpressurized chamber within the bore 40k.

In operation, the clutch pedal is depressed to move the piston assembly to the left to eject hydraulic fluid under pressure through fitting 38d for delivery to a coacting fluid pressure device such as the slave cylinder 16 controlling the clutch 18 and, upon release of the clutch pedal, the piston assembly is returned to the right under the action of a return spring 58 with hydraulic fluid flowing from the reservoir through the conduit 60 and fitting 38k and past the collapsed primary seal 44 to fill in the chamber 38c behind the retreating piston assembly. The rightward, return movement of the piston is defined by engagement of contact 56 with an annular lip 40m on the right end of cylinder member 40 and a coacting annular lip 32d on the right end of cartridge 32.

As the piston assembly moves forwardly within the cylinder structure, annular contact 56 first engages the contacts 50c to electrically span the circumferential space between the contacts and complete a circuit through the two leads 50 defining the spaced contacts 50c whereby to transmit a control signal to an associated cruise control device to disengage the cruise control whereafter, with further leftward movement of the piston assembly in response to further depression of the clutch pedal, contact 56 electrically spans the circumferential space between the contacts 50d to complete an electrical circuit through the two leads 50 defining the contacts 50d and thereby generate an electrical control signal for transmittal, for example, to the engine starter motor to enable starting of the engine and/or to the engine computer for appropriate action consistent with disengagement of the engine torque path.

The invention will be seen to provide a master cylinder assembly in which the switching functions are provided integral with the master cylinder assembly whereby to minimize the overall cost and complexity of the master cylinder and switch assembly and whereby to eliminate the space problems associated with the separate switch assembly positioned on the push rod of the master cylinder assembly.

While the invention has been described in connection with what is presently considered to be the most practical and preferred embodiment, it is to be understood that the invention is not to be limited to the disclosed embodiment but, on the contrary, is intended to cover modifications and equivalent arrangements included within the scope of the appended claims.

## Claims

1. A pressure cylinder apparatus (10) comprising:
a hydraulic cylinder structure (28) having a cylindrical wall defining a generally closed left end and a generally open right end,
a piston (34) moveable axially within the hollow (38c, 40k) of the cylinder structure (28),
a seal structure (30) between the piston (34) and the cylinder structure (28) defining a fluid pressure chamber within the cylinder structure (28) on the left side of the piston (34) and an unpressurized chamber on the right side of the piston (34),
a fluid pressure fitting (38d) communicating with the pressure chamber for connection to a fluid pressure conduit (22) communicating with a coacting fluid pressure device (16),
a piston rod (20) extending through the open end of the cylinder structure (28) and into the unpressurized chamber for connection to the right side of the piston (34),
a piston contact means (56) which is carried by the piston (34) at a location on the piston (34) to the right of the seal structure (30) and within the unpressurized chamber,
a cylinder contact means (50b) which is disposed at an interior surface of the cylinder structure (28) within the unpressurized chamber for coaction with the piston contact means (56) in response to axial movement of the piston (34) in the hollow (38c, 40k) of the cylinder structure (28), and
an electrical lead means (50) which is connected to one (50b) of the contact means and extends to a location external to the pressure cylinder apparatus (10) for providing an electrical control signal generated in response to engagement of the cylinder contact means (50b) with the piston contact means (56);
**characterized in that** the cylinder structure (28) includes a slot (40b) in which a cartridge (32) is fitted, the cylinder contact means (50b) being provided on the inner surface of the cartridge (32).

2. A pressure cylinder apparatus (10) according to claim 1, **characterized in that** the cylinder contact means (50b) comprises a plurality of axially spaced pairs of cylinder contacts (50c, 50d) disposed at an interior surface of the cylinder structure (28) within the unpressurized chamber for selective coaction with the piston contact means (56) in response to axial movement of the piston (34) in the hollow (38c, 40k) of the cylinder structure (28), wherein the electrical lead means (50) comprises a plurality of pairs of electrical leads connected to the respective pairs of cylinder contacts (50c, 50d) and extending to locations external to the cylinder structure (28) for providing respective electrical control signals generated in response to selective bridging of the pairs of cylinder contacts (50c, 50d) by the piston contact means (56).

3. A pressure cylinder apparatus (10) according to claim 1 or 2, **characterized in that** the seal structure (30) is carried by the cylinder structure (28).

4. A pressure cylinder apparatus (10) according to claim 3, **characterized in that** the seal structure (30) comprises an annular elastomeric seal (44) positioned in an annular groove (38n) provided in the interior surface of the cylinder structure (28) and arranged for wiping engagement with an exterior surface of the piston (34) as the piston (34) moves axially in the cylinder structure (28).

5. A pressure cylinder apparatus (10) according to any one of claims 1 to 4, **characterized in that** the cylinder structure (28) is a compound structure constituted by a left cylinder structure (38) defining the pressure chamber and a right cylinder structure (40) coupled to the left cylinder structure (38) and carrying the cylinder contact means (50b).

6. A pressure cylinder apparatus (10) according claim 4 or 5, **characterized in that** the annular groove (38n) for receiving the seal structure (30) is formed between coacting portions of the left and right cylinder structures (38, 40).

7. A pressure cylinder apparatus (10) according to claim 5 or 6, **characterized in that** the right cylinder structure (40) is a compound structure constituted by the cartridge (32) and the right cylinder member (40a), the cartridge (32) being received in the slot (40b) in the right cylinder member (40a), the slot (40b) extending axially of the right cylinder member (40a) and opening into the hollow interior of the right cylinder member (40a) and opening at the right end of the right cylinder member (40a).

8. A pressure cylinder apparatus (10) according to any one of claims 5 to 7, **characterized in that** the right cylinder structure (40) is received within an open left hand end of the left cylinder structure (38) and is held therein by snap connector means (38m, 40n).

9. A pressure cylinder apparatus (10) according to any one of claims 4 to 8, **characterized in that** the seal structure (30) comprises two axially spaced seals (44, 46) which contact the piston (34) and a spacer (48) sandwiched between the seals (44, 46).

10. A pressure cylinder apparatus (10) according to any one of claims 1 to 9, **characterized in that** the piston (34) is formed from an inner plastics portion (54) and an outer metal portion (52).

11. A pressure cylinder apparatus (10) according to claim 10, **characterized in that** the inner plastics portion comprises cooperating portions (54) which define a part-spherical socket (54h) which receives a ball end portion (20c) on the piston rod (20) to allow articulation of the piston rod (20) relative to the piston (34).

12. A pressure cylinder apparatus (10) according to claim 11, **characterized in that** the cooperating inner portions (54) of the piston (34) are held together by a metal collar which acts as the piston contact means (56).

13. A pressure cylinder apparatus (10) according to any one of claims 1 to 12, **characterized in that** the pressure cylinder apparatus (10) forms a hydraulic master cylinder for transmitting pressurized fluid to a slave cylinder (16) for controlling engagement and disengagement of a motor vehicle clutch (18).

## Patentansprüche

1. Druckzylindervorrichtung (10), mit:
einer hydraulischen Zylinderstruktur (28), die eine zylindrische Wand aufweist, welche ein allgemein geschlossenes linkes Ende und ein allgemein offenes rechtes Ende definiert,
einem Kolben (34), der in dem Hohlraum (38c, 40k) der Zylinderstruktur (28) axialbeweglich ist,
einer Dichtungsstruktur (30) zwischen dem Kolben (34) und der Zylinderstruktur (28), die eine Flüssigkeitsdruckkammer in der Zylinderstruktur (28) auf der linken Seite des Kolbens (34) und eine drucklose Kammer auf der rechten Seite des Kolbens (34) definiert,
einem Flüssigkeitsdruckanschluß (38d), der mit der Druckkammer kommuniziert, zum Anschluß an eine Flüssigkeitsdruckleitung (22), die mit einer zusammenwirkenden Flüssigkeitsdruckeinrichtung (16) kommuniziert,
einer Kolbenstange (20), die sich durch das offene Ende der Zylinderstruktur (28) hindurch und in die drucklose Kammer hinein erstreckt, zum Anschluß an die rechte Seite des Kolbens (34),
einer Kolbenkontakteinrichtung (56), die durch den Kolben (34) an einer Stelle auf dem Kolben (34) getragen ist, die rechts von der Dichtungsstruktur (30) und in der drucklosen Kammer liegt,
einer Zylinderkontakteinrichtung (50b), die an einer Innenfläche der Zylinderstruktur (28) in der drucklosen Kammer angeordnet ist, zum Zusammenwirken mit der Kolbenkontakteinrichtung (56) in Antwort auf eine Axialbewegung des Kolbens (34) im Hohlraum (38c, 40k) der Zylinderstruktur (28), und
einer elektrischen Leitungseinrichtung (50), die an eine (50b) der Kontakteinrichtungen angeschlossen ist und sich bis zu einer Stelle erstreckt, die außerhalb der Druckzylindervorrichtung (10) liegt, zum Bereitstellen eines elektrischen Steuersignals, das in Antwort auf ein Eingreifen der Zylinderkontakteinrichtung (50b) mit der Kolbenkontakteinrichtung (56) erzeugt wird;
**dadurch gekennzeichnet, daß** die Zylinderstruktur (28) einen Schlitz (40b) aufweist, in den eine Kartusche (32) eingepaßt ist, wobei die Zylinderkontakteinrichtung (50b) auf der Innenfläche der Kartusche (32) vorgesehen ist.

2. Druckzylindervorrichtung (10) nach Anspruch 1, **dadurch gekennzeichnet, daß** die Zylinderkontakteinrichtung (50b) eine Mehrzahl von axial beabstandeten Paaren von Zylinderkontakten (50c, 50d) aufweist, die an einer Innenfläche der Zylinderstruktur (28) in der drucklosen Kammer angeordnet sind, zum wahlweise Zusammenwirken mit der Kolbenkontakteinrichtung (56) in Antwort auf eine Axialbewegung des Kolbens (34) in dem Hohlraum (38c, 40k) der Zylinderstruktur (28), wobei die elektrische Leitungseinrichtung (50) eine Mehrzahl von Paaren von elektrischen Leitungen aufweist, die an jeweilige Paare von Zylinderkontakten (50c, 50d) angeschlossen sind und sich zu Stellen erstrecken, die außerhalb der Zylinderstruktur (28) liegen, zum Bereitstellen jeweiliger elektrischer Steuersignale, die in Antwort auf ein wahlweises Überbrücken der Paare von Zylinderkontakten (50c, 50d) durch die Kolbenkontakteinrichtung (56) erzeugt werden.

3. Druckzylindervorrichtung (10) nach Anspruch 1 oder 2, **dadurch gekennzeichnet, daß** die Dichtungsstruktur (30) durch die Zylinderstruktur (28) getragen ist.

4. Druckzylindervorrichtung (10) nach Anspruch 3, **dadurch gekennzeichnet, daß** die Dichtungsstruktur (30) eine ringförmige elastomere Dichtung (44) aufweist, die in einer ringförmigen Nut (38n) positioniert ist, welche in der Innenfläche der Zylinderstruktur (28) vorgesehen ist, und angeordnet ist zum abstreifenden Eingriff mit einer Außenfläche des Kolbens (34), wenn sich der Kolben (34) in der Zylinderstruktur (28) axial bewegt.

5. Druckzylindervorrichtung (10) nach einem der Ansprüche 1 bis 4, **dadurch gekennzeichnet, daß** die Zylinderstruktur (28) eine Verbundstruktur ist, die durch eine die Druckkammer definierende linke Zylinderstruktur (38) und eine rechte Zylinderstruktur (40) gebildet ist, die mit der linken Zylinderstruktur (38) verbunden ist und die Zylinderkontakteinrichtung (50b) trägt.

6. Druckzylindervorrichtung (10) nach Anspruch 4 oder 5, **dadurch gekennzeichnet, daß** die ringförmige Nut (38n) zur Aufnahme der Dichtungsstruktur (30) zwischen zusammenwirkenden Abschnitten der linken und der rechten Zylinderstruktur (38, 40) ausgebildet ist.

7. Druckzylindervorrichtung (10) nach Anspruch 5 oder 6, **dadurch gekennzeichnet, daß** die rechte Zylinderstruktur (40) eine Verbundstruktur ist, die durch die Kartusche (32) und das rechte Zylinderteil (40a) gebildet ist, wobei die Kartusche (32) in dem Schlitz (40b) in dem rechten Zylinderteil (40a) aufgenommen ist, wobei sich der Schlitz (40b) axial von dem rechten Zylinderteil (40a) erstreckt und sich in das hohle Innere des rechten Zylinderteils (40a) öffnet und sich an dem rechten Ende des rechten Zylinderteils (40a) öffnet.

8. Druckzylindervorrichtung (10) nach einem der Ansprüche 5 bis 7, **dadurch gekennzeichnet, daß** die rechte Zylinderstruktur (40) in einem offenen linken Ende der linken Zylinderstruktur (38) aufgenommen ist und darin durch eine Schnappverbindungseinrichtung (38m, 40n) gehalten ist.

9. Druckzylindervorrichtung (10) nach einem der Ansprüche 4 bis 8, **dadurch gekennzeichnet, daß** die Dichtungsstruktur (30) zwei axial beabstandete Dichtungen (44, 46) aufweist, die den Kolben (34) und einen zwischen den Dichtungen (44, 46) eingelegten Abstandshalter (48) berühren.

10. Druckzylindervorrichtung (10) nach einem der Ansprüche 1 bis 9, **dadurch gekennzeichnet, daß** der Kolben (34) aus einem inneren Kunststoffabschnitt (54) und einem äußeren Metallabschnitt (52) gebildet ist.

11. Druckzylindervorrichtung (10) nach Anspruch 10, **dadurch gekennzeichnet, daß** der innere Kunststoffabschnitt zusammenwirkende Abschnitte (54) aufweist, die ein teilsphärisches Lager (54h) definieren, das einen Kugelendabschnitt (20c) an der Kolbenstange (20) aufnimmt, um ein Verschwenken der Kolbenstange (20) relativ zu dem Kolben (34) zu ermöglichen.

12. Druckzylindervorrichtung (10) nach Anspruch 11, **dadurch gekennzeichnet, daß** die zusammenwirkenden inneren Abschnitte (54) des Kolbens (34) durch einen metallischen Kragen zusammengehalten sind, der als die Kolbenkontakteinrichtung (56) fungiert.

13. Druckzylindervorrichtung (10) nach einem der Ansprüche 1 bis 12, **dadurch gekennzeichnet, daß** die Druckzylindervorrichtung (10) einen hydraulischen Geberzylinder zum Übertragen von druckbeaufschlagter Flüssigkeit zu einem Nehmerzylinder (16) bildet, um das Einrücken und Ausrücken einer Kraftfahrzeugkupplung (18) zu steuern.

## Revendications

1. Dispositif de cylindre de pression (10) comprenant :
un cylindre hydraulique (28) possédant une paroi cylindrique définissant une extrémité gauche généralement fermée et une extrémité droite généralement ouverte,
un piston (34) déplaçable axialement à l'intérieur de la cavité (38c, 40k) du cylindre (28),
un joint (30) entre le piston (34) et le cylindre (28) définissant une chambre de pression de fluide à l'intérieur du cylindre (28) sur le côté gauche du piston (34) et une chambre non pressurisée sur le côté droit du piston (34),
un ajustement de pression de fluide (38d) communiquant avec la chambre de pression pour une connexion à une canalisation de pression de fluide (22) communiquant avec le dispositif de pression de fluide agissant de façon conjointe (16),
une tige de piston (20) s'étendant à travers l'extrémité ouverte du cylindre (28) et dans la chambre non pressurisée pour une connexion au côté droit du piston (34),
un moyen de contact de piston (56) qui est supporté par le piston (34) en un endroit sur le piston (34) vers la droite du joint (30) et à l'intérieur de la chambre non pressurisée,
un moyen de contact de cylindre (50b) qui est disposé sur la surface intérieure du cylindre (28) à l'intérieur de la chambre non pressurisée pour une action conjointe avec le moyen de contact de piston (56) en réponse au mouvement axial du piston (34) dans la cavité (38c, 40k) du cylindre (28), et
un moyen d'alimentation électrique (50) qui est relié à l'un (50b) des moyens de contact et s'étend vers un endroit à l'extérieur du dispositif de cylindre de pression (10) pour délivrer un signal de commande électrique généré en réponse à l'engagement du moyen de contact de cylindre (50b) avec le moyen de contact de piston (56) ;
**caractérisé en ce que** le cylindre (28) comprend une fente (40b) dans laquelle une cartouche (32) est adaptée, le moyen de contact de cylindre (50b) étant prévu sur la surface interne de la cartouche (32).

2. Dispositif de cylindre de pression (10) selon la revendication 1, **caractérisé en ce que** le moyen de contact de cylindre (50b) comprend une pluralité de paires de contacts de cylindre (50c, 50d) axialement espacées disposées sur une surface intérieure du cylindre (28) à l'intérieur de la chambre non pressurisée pour une action conjointe sélective avec le moyen de contact de piston (56) en réponse au mouvement axial du piston (34) dans la cavité (38c, 40k) du cylindre (28), dans lequel le moyen d'alimentation électrique (50) comprend une pluralité de paires de fils électriques reliées aux paires respectives de contacts de cylindre (50c, 50d) et s'étendant vers des endroits à l'extérieur du cylindre (28) pour délivrer des signaux de commande électriques respectifs générés en réponse à une jonction sélective des paires de contact de cylindre (50c, 50d) par le moyen de contact de piston (56).

3. Dispositif de cylindre de pression (10) selon la revendication 1 ou 2, **caractérisé en ce que** le joint (30) est supporté par le cylindre (28).

4. Dispositif de cylindre de pression (10) selon la revendication 3, **caractérisé en ce que** le joint (30) comprend un joint élastomère annulaire (44) positionné dans une gorge annulaire (38n) prévue dans la surface intérieure du cylindre (28) et agencé pour un engagement frottant avec une surface extérieure du piston (34) lorsque le piston (34) se déplace axialement dans le cylindre (28).

5. Dispositif de cylindre de pression (10) selon l'une quelconque des revendications 1 à 4, **caractérisé en ce que** le cylindre (28) est une structure composée constituée d'un cylindre gauche (38) définissant la chambre de pression et d'un cylindre droit (40) couplé au cylindre gauche (38) et supportant le moyen de contact de cylindre (50b).

6. Dispositif de cylindre de pression (10) selon la revendication 4 ou 5, **caractérisé en ce que** la gorge annulaire (38n) pour recevoir le joint (30) se trouve entre les parties agissant conjointement des cylindres gauche et droit (38, 40).

7. Dispositif de cylindre de pression (10) selon la revendication 5 ou 6, **caractérisé en ce que** le cylindre droit (40) est une structure composée constituée par la cartouche (32) et le cylindre droit (40a), la cartouche (32) étant reçue dans la fente (40b) dans le cylindre droit (40a), la fente (40b) s'étendant axialement depuis le cylindre droit (40a) et s'ouvrant dans l'intérieur de la cavité du cylindre droit (40a) et s'ouvrant à l'extrémité droite du cylindre droit (40a).

8. Dispositif de cylindre de pression (10) selon l'une quelconque des revendications 5 à 7, **caractérisé en ce que** le cylindre droit (40) est reçu à l'intérieur d'une extrémité gauche ouverte du cylindre gauche (38) et est maintenu à l'intérieur par un moyen de connexion d'arrêt (38m, 40n).

9. Dispositif de cylindre de pression (10) selon l'une quelconque des revendications 4 à 8, **caractérisé en ce que** le joint (30) comprend deux joints espacés axialement (44, 46) qui viennent en contact du piston (34) et une pièce d'écartement (48) prise en sandwich entre les joints (44, 46).

10. Dispositif de cylindre de pression (10) selon l'une quelconque des revendications 1 à 9, **caractérisé en ce que** le piston (34) est formé à partir d'une partie en plastique interne (54) et d'une partie en métal externe (52).

11. Dispositif de cylindre de pression (10) selon la revendication 10, **caractérisé en ce que** la partie en plastique interne comprend des parties conjointes (54) qui définissent une douille en partie sphérique (54h) qui reçoit une partie d'extrémité à rotule (20c) sur la tige de piston (20) pour permettre l'articulation de la tige de piston (20) par rapport au piston (34).

12. Dispositif de cylindre de pression (10) selon la revendication 11, **caractérisé en ce que** les parties internes conjointes (54) du piston (34) sont maintenues ensemble par un collier métallique qui agit comme moyen de contact de piston (56).

13. Dispositif de cylindre de pression (10) selon l'une quelconque des revendications 1 à 12, **caractérisé en ce que** le dispositif de cylindre de pression (10) forme un maître cylindre hydraulique pour transmettre un fluide pressurisé à un cylindre secondaire (16) pour commander l'engagement et le désengagement d'un embrayage d'une automobile (18).
